# FASCICULE DE BREVET EUROPEEN

(11) **EP 2 804 804 B1**
(45) Date de publication et mention de la délivrance du brevet: **06.03.2019**
(21) Numéro de dépôt: 13705216.3
(22) Date de dépôt: 17.01.2013
(51) Int. Cl.: B62D 65/02, B23P 21/00

(54) **PROCÉDÉ ET SYSTÈME D'APPROVISIONNEMENT EN PIÈCES DE POSTES DE MONTAGE D'UNE LIGNE D'ASSEMBLAGE**
VERFAHREN UND ANORDNUNG FÜR DIE ZUFÜHRUNG VON WERKSTÜCKEN ZU ARBEITSSTATIONEN EINER MONTAGELINIE
PROCESS AND SYSTEM FOR FEEDING WORKPIECES TO WORKING STATIONS OF AN ASSEMBLY LINE

(30) Priorité: 19.01.2012 FR 1250540
(43) Date de publication de la demande: 26.11.2014
(73) Titulaire: Renault S.A.S., 92100 Boulogne-Billancourt (FR)
(72) Inventeur: GALLOIS, Eric, F-78910 Orgerus (FR)
(86) Numéro de dépôt international: PCT/FR2013/050108
(87) Numéro de publication internationale: WO 2013/107989

(56) Documents cités:
- EP-A1- 1 935 555
- JP-A- 4 183 541
- JP-U- H0 546 822
- JP-U- 62 171 521
- US-A1- 2004 134 756

## Description

### Domaine technique de l'invention

L'invention concerne un procédé et un système d'approvisionnement en pièces, d'une ligne d'assemblage sur laquelle se déplace un support d'assemblage portant un sous-ensemble de véhicule automobile et où des pièces sont ajoutées au sous-ensemble de véhicule automobile au niveau de plusieurs postes de montage.

L'invention a pour objet également un procédé d'assemblage d'un sous-ensemble de véhicule automobile, dans lequel au moins un poste de montage donné d'une ligne d'assemblage est approvisionné en mettant en oeuvre le procédé d'approvisionnement, ainsi qu'une ligne d'assemblage comportant le système d'approvisionnement.

### État de la technique

Dans l'organisation d'une ligne d'assemblage d'un sous-ensemble de véhicule automobile, la manière d'approvisionner les postes de montage échelonnés le long de la ligne, en pièces destinées à être ajoutées ou montées au sous-ensemble au niveau des postes de montage, est une problématique difficile à optimiser en termes d'ergonomie, de coût et de performances.

Il a déjà été imaginé de déplacer le long de la ligne d'assemblage un élément de collectage de type bac ou chariot collectant toutes les pièces associées à l'ordre de fabrication devant être montées sur la ligne d'assemblage. Les opérateurs de chaque poste de montage saisissent les pièces qu'ils doivent assembler dans l'élément de collectage et non plus dans des étagères de stockage placées en bordure de la ligne d'assemblage.

Une solution connue consiste à marier manuellement l'élément de collectage avec un support d'assemblage de type balancelle ou palette qui se déplace le long de la ligne d'assemblage tout en portant le sous-ensemble en cours d'assemblage. Cette solution totalement manuelle est coûteuse en temps opérateur car le temps passé n'apporte pas de valeur ajoutée à l'assemblage des pièces.

Une autre solution consiste à créer un flux parallèle à la ligne d'assemblage où les éléments de collectage sont posés sur des chariots qui circulent indépendamment mais en synchronisme par rapport aux supports d'assemblage qui eux se déplacent le long de la ligne d'assemblage. Cette solution nécessite un investissement important pour la réalisation des deux flux (celui lié aux éléments de collectage en sus de celui lié aux supports d'assemblage). En effet, le flux des éléments de collectage nécessite l'utilisation de nombreux mécanismes et automatismes supplémentaires (motorisation, indexage, etc...). Cette solution est en outre peu ergonomique car l'opérateur doit généralement se retourner pour prendre les pièces dont il a besoin à chaque cycle.

Le document JP 4 183541 A décrit un procédé d'approvisionnement dont l'élément de collectage est associé au support de montage au moyen d'un robot.

Ainsi, la prise en charge et l'entraînement de l'élément de collectage sont des paramètres délicats et perfectibles qui grèvent d'autant le coût, les performances et l'ergonomie de ces solutions existantes.

Ces problématiques sont particulièrement importantes dans le cas particulier où les pièces à assembler et/ou le sous-ensemble de véhicule automobile comprend au moins une partie d'au moins un siège du véhicule automobile. En effet, les fournisseurs de sièges n'utilisent pas de flux de collectage. Les supports d'assemblage circulent sur un convoyeur à défilement continu ou en séquentiel. Les pièces à assembler sont disposées autour de la ligne d'assemblage.

### Objet de l'invention

Le but de la présente invention est de proposer une solution d'approvisionnement en pièces au niveau d'au moins un poste de montage d'une ligne d'assemblage d'un sous-ensemble de véhicule automobile, qui remédie aux inconvénients listés ci-dessus.

Notamment, l'objet de l'invention est de fournir une telle solution qui améliore les performances, l'ergonomie et le coût.

Un premier aspect de l'invention concerne un procédé d'approvisionnement en pièces selon la revendication 1.

Un cycle comprenant en outre les étapes successives suivantes peut être associé à chaque sous-ensemble de véhicule automobile :
- déplacement de l'élément de collectage le long de la ligne d'assemblage par convoyage du support d'assemblage, en passant par le poste de montage où les pièces sont extraites de l'élément de collectage,
- transport de l'élément de collectage en direction de l'emplacement d'association, par convoyage du support d'assemblage,
- suppression automatique de l'association entre l'élément de collectage et le support d'assemblage, à proximité de l'emplacement d'association.

L'étape d'association comprend une étape de dépôt de l'élément de collectage sur le support d'assemblage. L'étape de dépôt comprend les étapes simultanées suivantes :
- élévation du support d'assemblage entre un convoyeur inférieur assurant l'étape de transport et un convoyeur supérieur assurant l'étape de déplacement,
- et maintien de l'élément de collectage à l'emplacement d'association configuré pour coïncider avec la trajectoire du support d'assemblage durant l'étape d'élévation.

Préalablement à l'étape d'association, le cycle peut comprendre une étape d'approvisionnement de l'élément de collectage en pièces à assembler au sous-ensemble de véhicule automobile au niveau dudit au moins un poste de montage donné puis une étape de transfert de l'élément de collectage contenant les pièces jusqu'à l'emplacement d'association.

Après l'étape de suppression automatique de l'association, le cycle peut comprendre une étape de transfert de l'élément de collectage vers une zone où l'étape d'approvisionnement du cycle suivant est réalisée.

Un deuxième aspect de l'invention concerne un procédé d'assemblage d'un sous-ensemble de véhicule automobile, dans lequel au moins un poste de montage donné d'une ligne d'assemblage du sous-ensemble de véhicule automobile est approvisionné en pièces à assembler au sous-ensemble de véhicule automobile au niveau dudit au moins un poste de montage donné en mettant en oeuvre un tel procédé d'approvisionnement.

Avant l'étape de transport du procédé d'approvisionnement, le procédé d'assemblage comprend une étape d'évacuation, depuis le support d'assemblage, du sous-ensemble assemblé durant l'étape de déplacement du procédé d'approvisionnement.

Les pièces et/ou le sous-ensemble comportent au moins un siège du véhicule automobile.

Un troisième aspect de l'invention concerne un système d'approvisionnement en pièces pour une ligne d'assemblage sur laquelle se déplace un support d'assemblage portant un sous-ensemble de véhicule automobile et où des pièces sont ajoutées au sous-ensemble de véhicule automobile au niveau de plusieurs postes de montage. Le système comprend des moyens matériels et/ou logiciels qui mettent en oeuvre un tel procédé d'approvisionnement.

Le support d'assemblage peut être équipé d'un élément de portage de l'élément de collectage, configuré de sorte à venir automatiquement en contact, lors d'une élévation du support d'assemblage, avec l'élément de collectage positionné par un élément de maintien à l'emplacement d'association coïncidant avec la trajectoire d'élévation de l'élément de portage.

L'élément de portage peut comprendre un support adoptant une forme générale de U dont les branches présentent entre elles un écartement inférieur à une dimension de l'élément de collectage et supérieur à une dimension de l'élément de maintien.

Un quatrième aspect de l'invention concerne une ligne d'assemblage d'un sous-ensemble de véhicule automobile, comprenant des postes de montage et un tel système d'approvisionnement approvisionnant au moins un poste de montage donné en pièces à assembler au sous-ensemble de véhicule automobile au niveau dudit au moins un poste de montage donné.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue schématique de dessus d'un exemple de système d'approvisionnement selon l'invention,
- la figure 2 est une vue schématique de côté du système de la figure 1, au niveau d'une zone d'entrée de la ligne d'assemblage,
- la figure 3 représente le détail de la figure 2 entouré par un cercle,
- et la figure 4 est un organigramme représentant des étapes successives d'un exemple de procédé d'assemblage d'un sous-ensemble.

### Description de modes préférentiels de l'invention

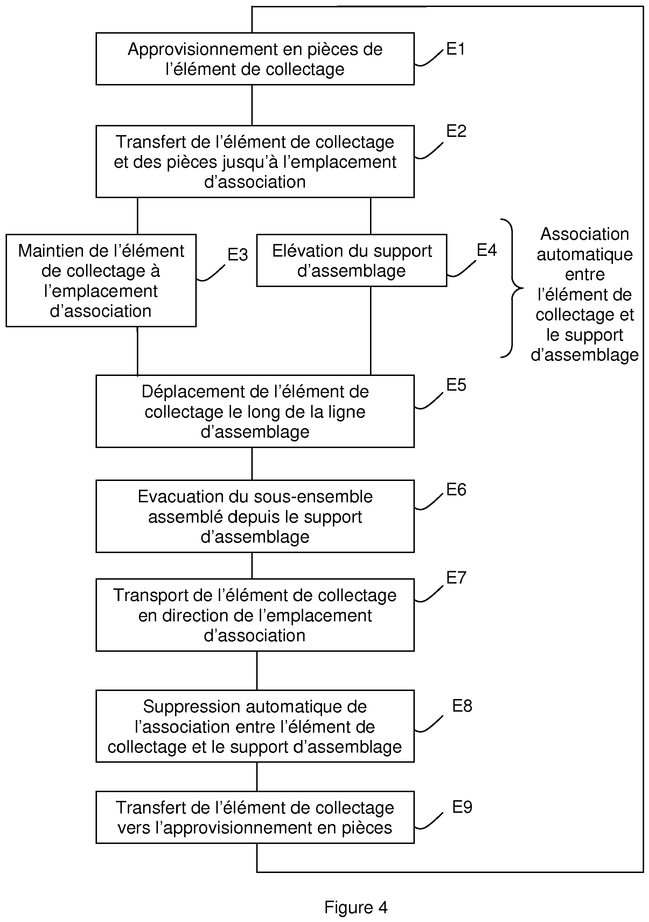

Dans la suite de la description, un procédé d'assemblage d'un sous-ensemble 10 de véhicule automobile va être décrit. Ce procédé d'assemblage prévoit qu'au moins un poste de montage 13 donné d'une ligne d'assemblage 11 du sous-ensemble 10 soit approvisionné en pièces 12 à assembler au sous-ensemble au niveau de ce poste de montage 13 donné, en mettant en oeuvre un procédé d'approvisionnement qui lui aussi va être décrit. Des étapes possibles du procédé d'assemblage et notamment du procédé d'approvisionnement sont présentées sous la forme d'un organigramme sur la figure 4.

Classiquement, un support d'assemblage 14 de type palette, luge ou balancelle, destiné à porter le sous-ensemble 10 de véhicule automobile en cours d'assemblage, se déplace (de manière continue ou séquentielle, par exemple au moyen d'un convoyeur supérieur 15) sur la ligne d'assemblage 11 où des pièces sont ajoutées au sous-ensemble 10 de véhicule automobile au niveau d'un ou plusieurs poste(s) de montage de la ligne d'assemblage 11. L'opération d'assemblage qui permet d'ajouter au sous-ensemble des pièces à un poste de montage de la ligne 11, notamment au poste 13 donné pour le montage des pièces 12 approvisionnées par le procédé d'approvisionnement, est réalisée par un opérateur 16 ou par une machine dédiée (non représentée) tandis que le sous-ensemble 10 en cours d'assemblage est porté par le support d'assemblage 14 lui-même convoyé par le convoyeur supérieur 15. Le procédé d'approvisionnement mentionné ci-dessus permet d'approvisionner la ligne d'assemblage 11 en pièces 12 au niveau d'au moins un poste de montage 13 donné, avantageusement tous les postes de la ligne 11, où les pièces 12 ainsi approvisionnées peuvent être ajoutées au sous-ensemble de véhicule automobile par l'opérateur 16 ou la machine. Les pièces 12 et/ou le sous-ensemble 10 comportent notamment, mais non exclusivement, au moins une partie d'au moins un siège du véhicule automobile. Par exemple, les pièces 12 comprennent des sièges droits et des sièges gauches.

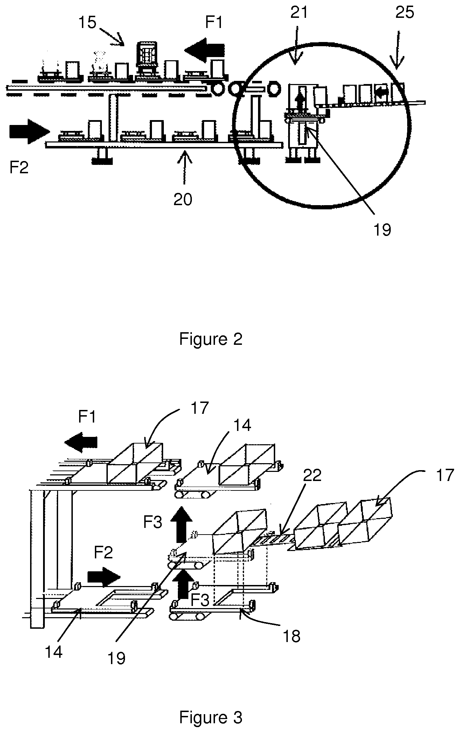

De manière générale, le procédé d'approvisionnement utilise un élément de collectage 17 contenant des pièces 12 à assembler au sous-ensemble 10 de véhicule automobile au niveau dudit au moins un poste de montage 13 donné de la ligne d'assemblage 11. Avantageusement, l'ensemble des pièces destinées à être montées le long de la ligne 11, à tous les postes de montage nécessitant l'utilisation de pièces à assembler, sont préalablement contenues par l'élément de collectage 17. Cet élément de collectage 17, par exemple de type bac ou chariot, alors qu'il contient les pièces 12 alimentant ledit au moins un poste 13 donné, est associé au support d'assemblage 14 de manière automatique (signifiant ici sans intervention humaine) avant d'être déplacé selon la flèche F1 (figures 2 et 3) le long de la ligne d'assemblage 11. Plus précisément, l'élément de collectage 17 est automatiquement associé au support d'assemblage 14 avant d'être entraîné par le support d'assemblage 14 jusqu'à l'entrée de la ligne d'assemblage 11 puis au moins le long de toute la longueur de la ligne d'assemblage 11. Il en résulte que le support d'assemblage 14 et l'élément de collectage 17 équipé des pièces 12 atteignent automatiquement, ensemble, ce poste de montage 13 à approvisionner en pièces 12. Comme il le sera compris plus loin, l'association automatique entre l'élément de collectage 17 et le support d'assemblage 14 peut notamment résulter d'un simple mouvement de défilement du support d'assemblage 14 au niveau d'un emplacement d'association 19 (figures 2 et 3) défini plus loin.

L'organigramme de la figure 4 représente les étapes successives ou simultanées E1 à E9 d'un exemple de procédé d'assemblage d'un sous-ensemble de véhicule automobile, dans lequel au moins un poste de montage 13 donné est approvisionné en pièces 12 à assembler au sous-ensemble au niveau de ce poste de montage 13 en mettant en oeuvre un exemple particulier, mais non limitatif, de procédé d'approvisionnement tel que décrit ci-dessus.

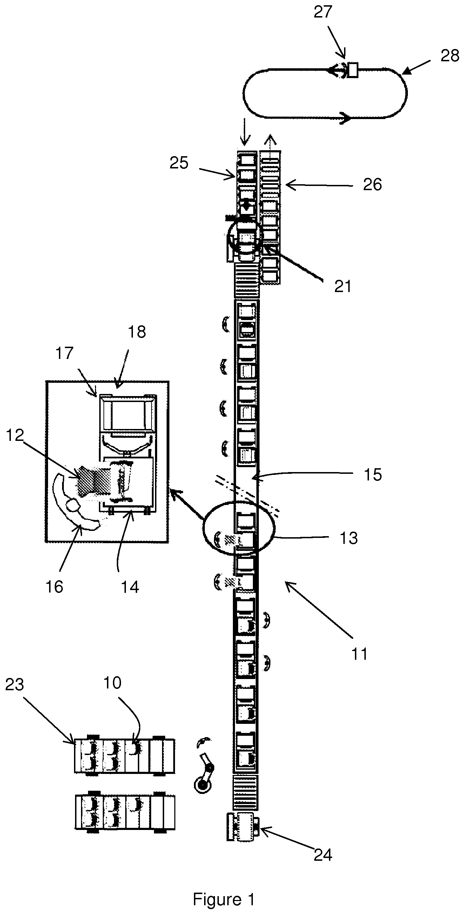

Dans une étape E1 d'approvisionnement, l'élément de collectage 17 est approvisionné en pièces 12 à assembler au sous-ensemble 10 de véhicule automobile au niveau dudit au moins un poste de montage 13 donné. Cette étape E1 peut être réalisée au niveau d'une zone d'approvisionnement repérée 27 sur la figure 1, légèrement à distance de l'entrée de la ligne d'assemblage 11.

Puis, dans une étape E2 de transfert, l'élément de collectage 17 contenant les pièces 12 à l'issue de l'étape E1 est transféré jusqu'à l'emplacement d'association 19. Cette étape E2 sera détaillée plus loin.

Puis, le procédé d'assemblage comprend une étape d'association automatique entre le support d'assemblage 14 et l'élément de collectage 17 contenant alors les pièces 12 à l'issue des étapes E1 et E2. Cette étape d'association automatique est réalisée à l'emplacement d'association 19 sans besoin d'intervention humaine (figures 2 et 3).

Dans un exemple particulièrement avantageux en raison de sa simplicité, de son coût et de ses performances, cette étape d'association automatique de l'élément de collectage 17 au support d'assemblage 14, à chaque cycle d'approvisionnement (un cycle sera défini plus loin), comprend une étape de dépôt de l'élément de collectage 17 sur le support d'assemblage 14. Comme représenté plus particulièrement sur les figures 2 et 3, cette étape de dépôt peut comprendre notamment, mais non exclusivement, les étapes simultanées suivantes :
- une étape E4 d'élévation, selon les flèches F3, du support d'assemblage 14, par exemple au moyen d'un ascenseur 21, entre un convoyeur inférieur 20 assurant une étape E7 de transport F2 décrite plus loin et le convoyeur supérieur 15 assurant l'étape E5 de déplacement F1 décrite plus loin,
- et une étape E3 de maintien de l'élément de collectage 17 à l'emplacement d'association 19, lequel est configuré pour coïncider avec la trajectoire du support d'assemblage 14 durant l'étape E4 d'élévation.

Plus précisément, le support d'assemblage 14 est par exemple équipé d'un élément de portage 18 de l'élément de collectage 17, configuré de sorte à venir automatiquement en contact, lors de l'élévation F3 du support d'assemblage 14, avec l'élément de collectage 17 positionné par un élément de maintien 22 à l'emplacement d'association 19 coïncidant avec la trajectoire d'élévation de l'élément de portage 18. L'élément de maintien 22 peut notamment se présenter sous la forme de l'extrémité (délimitée par des butées adéquates) d'un convoyeur gravitaire 25 d'entrée le long duquel les éléments de collectage 17 contenant les pièces 12 se déplacent sous l'effet de la gravité jusqu'à venir s'immobiliser à l'emplacement d'association 19 grâce à ces butées.

L'élément de portage 18 comprend notamment un support agencé en partie arrière (suivant le sens de défilement du support d'assemblage 14 le long de la ligne 11) du support d'assemblage 14 et adoptant une forme générale de U dont les branches présentent entre elles un écartement inférieur à une dimension de l'élément de collectage 17 et supérieur à une dimension de l'élément de maintien 22. Ainsi, lorsque l'élément de collectage 17 est maintenu à l'emplacement d'association 19 grâce à l'élément de maintien 22, les branches du support de l'élément de portage 18 passent de part et d'autre de l'élément de maintien 22 durant l'élévation F3 du support d'assemblage 14, jusqu'à venir en contact avec l'élément de collectage 17. Le mouvement relatif entre les branches du support de l'élément de portage 18 et l'élément de collectage 17 assure le dépôt automatique de l'élément de collectage 17 sur le support d'assemblage 14 par simple mouvement de défilement (élévation F3) du support d'assemblage 14.

L'étape d'association peut éventuellement comprendre une étape de verrouillage automatique en position de l'élément de collectage 17 sur le support d'assemblage 14, permettant notamment un blocage positif de l'élément de collectage 17 lors des étapes suivantes du procédé.

Ensuite, le procédé d'assemblage comprend une étape E5 de déplacement F1 de l'élément de collectage 17 le long de la ligne d'assemblage 11, ce déplacement F1 résultant du convoyage du support d'assemblage 14 le long de la ligne 11 assuré par le convoyeur supérieur 15. En effet, l'élément de collectage 17 étant associé au support d'assemblage 14 lui-même mis en mouvement par le convoyeur supérieur 15, l'élément de collectage 17 est entrainé dans le déplacement F1 par le support d'assemblage 14. Durant l'étape E5, l'élément de collectage 17 passe par tous les postes de la ligne 11, donc en particulier par ledit au moins un poste de montage 13 donné où les pièces 12 préalablement chargées à l'étape E1 sont extraites de l'élément de collectage 17 pour être assemblées au sous-ensemble 10. Normalement, à l'issue de l'étape E5, l'élément de collectage 17 ne contient plus les pièces 12 et il convient alors de le conduire à la zone d'approvisionnement 27 pour un nouveau chargement débutant un nouveau cycle d'approvisionnement.

Pour assurer l'étape E5, il peut être nécessaire de prévoir une table de mise au pas qui assure l'insertion des éléments de collectage 17 provenant de l'ascenseur 21 vers le convoyeur supérieur 15.

Puis, le procédé d'assemblage comprend une étape E6 d'évacuation, depuis le support d'assemblage 14, du sous-ensemble 10 assemblé durant l'étape E5 de déplacement le long de la ligne d'assemblage 11. En effet, durant le déplacement F1 de l'élément de collectage 17 résultant du convoyage du support d'assemblage 14, le sous-ensemble 10 en cours de fabrication passe par tous les postes de la ligne 11 de sorte qu'en sortie de la ligne 11, à l'issue de l'étape E5, le sous-ensemble 10 assemblé peut être évacué sur un transporteur 23 par exemple.

Puis, le procédé d'assemblage prévoit une étape E7 de transport de l'élément de collectage 17 vide, suivant la flèche F2, en direction de l'emplacement d'association 19. Ce déplacement F2 résulte de la mise en mouvement du support d'assemblage 14 assurée par le convoyeur inférieur 20, globalement depuis la sortie de la ligne 11 et en direction globalement de son entrée. En effet, l'élément de collectage 17 vide étant associé au support d'assemblage 14 lui-même mis en mouvement par le convoyeur inférieur 20, l'élément de collectage 17 est entraîné dans le déplacement F2 par le support d'assemblage 14, en direction de l'emplacement d'association 19, mais avantageusement sans atteindre cet emplacement 19.

Suivant la nature des convoyeurs supérieur 15 et inférieur 20 et en fonction également de la manière, pour le support d'assemblage 14, de passer depuis le convoyeur supérieur 15 vers le convoyeur inférieur 20, il est possible de prévoir une étape d'abaissement de l'élément de collectage 17 entre les étapes E5 de déplacement et E7 de transport. Cette étape facultative est alors par exemple intercalée entre les étapes E6 d'évacuation et l'étape E7 de transport. Cette étape peut par exemple résulter de l'abaissement du support d'assemblage 14, par exemple au moyen d'un ascenseur 24 (figure 1), pour passer du convoyeur supérieur 15 au convoyeur inférieur 20. L'élément de collectage 17 étant associé au support d'assemblage 14 lui-même mis en mouvement par l'ascenseur 24, l'élément de collectage 17 est entraîné dans le mouvement d'abaissement par le support d'assemblage 14.

Puis, dans une étape E8, l'association entre l'élément de collectage 17 et le support d'assemblage 14 est supprimée automatiquement (sans intervention humaine), à proximité de l'emplacement d'association 19. Notamment, la suppression automatique de l'assujettissement de l'élément de collectage 17 au support d'assemblage 14 est réalisée avant d'arriver à l'emplacement d'association 19, afin de libérer la place nécessaire à l'association automatique de l'élément de collectage 17 utilisé dans le cycle d'approvisionnement suivant. La manière de réaliser cette suppression automatique dépend de la nature de l'association et peut par exemple être obtenue au moyen d'un mécanisme de poussée (non représenté) destiné à pousser latéralement l'élément de collectage 17, par exemple horizontalement et perpendiculairement au convoyeur inférieur 20, hors de l'élément de portage 18 et donc hors du support d'assemblage 14. Le mécanisme de poussée est prévu le long de la trajectoire du support d'assemblage 14 de manière à pouvoir agir sur l'élément de collectage 17 avant que le support d'assemblage 14 n'atteigne l'emplacement d'association 19.

Puis, le procédé d'assemblage comprend une étape E9 de transfert de l'élément de collectage 17 libéré à l'issue de l'étape E8, vers la zone d'approvisionnement 27 où l'étape E1 d'approvisionnement du cycle suivant est réalisée. Notamment, le déplacement de l'élément de collectage 17 résultant de l'action appliquée par le mécanisme de poussée permet de le mettre en place sur un convoyeur gravitaire 26 de sortie le long duquel les éléments de collectage 17 vides se déplacent sous l'effet de la gravité jusqu'à venir s'immobiliser en sortie grâce à des butées adaptées. Puis, en sortie du convoyeur gravitaire 26 de sortie, l'élément de collectage 17 est positionné par exemple manuellement sur une partie d'un mécanisme d'entraînement 28 en boucle fermée qui assure le transfert de l'élément de collectage 17 jusqu'à la zone d'approvisionnement 27.

A l'issue de l'étape E1 d'approvisionnement de l'élément de collectage 17, ce dernier contenant les pièces 12 est transféré à l'emplacement d'association 19 (étape E2) grâce à une autre partie du mécanisme d'entraînement 28, puis par le convoyeur gravitaire 25 d'entrée. La mise en place des éléments de collectage 17 sur le convoyeur gravitaire 25 d'entrée est manuelle et les éléments de collectage 17 sont stockés sur le convoyeur gravitaire 25 d'entrée de sorte à alimenter l'emplacement d'association 19 les uns après les autres.

Il résulte de ce qui précède qu'un cycle d'approvisionnement comprenant les étapes E1 à E5 et E7 à E9, est associé à chaque sous-ensemble 10 de véhicule automobile. Dans ce cycle, l'entraînement de l'élément de collectage 17 entre le convoyeur gravitaire 25 d'entrée et le convoyeur gravitaire 26 de sortie est intégralement réalisé grâce au support d'assemblage 14 auquel il est associé.

Ainsi, le flux de collectage des pièces 12 destinées à alimenter au moins un poste de montage 13 de la ligne d'assemblage 11 et le flux de convoyage des supports d'assemblage 14 destinés à porter les sous-ensemble 10 en cours d'assemblage sont fusionnés. Seuls les mouvements mécaniques et automatisés du flux de convoyage des supports d'assemblage 14 sont utilisés.

Le système d'approvisionnement en pièces pour une ligne d'assemblage comprend des moyens matériels et/ou logiciels qui mettent en oeuvre le procédé d'approvisionnement préalablement décrit et éventuellement plus globalement le procédé d'assemblage. Une unité de commande peut être prévue pour piloter l'ensemble des actions afin d'assurer les étapes décrites ci-dessus.

La solution précédemment décrite présente les avantages supplémentaires suivants :
- de bonnes performances en raison du fait que le dépôt des éléments de collectage 17 pleins et la prise des éléments de collectage 17 vides peuvent être regroupées globalement en un seul et même point, permettant une optimisation du flux de collectage,
- un faible coût car aucune installation particulière n'est nécessaire pour l'entraînement des éléments de collectage pleins et le retour des éléments de collectage vides ; seul l'entraînement des supports d'assemblage 14 est utilisé,
- de bonnes performances en raison du fait qu'aucun temps opérateur n'est nécessaire pour la mise en place de l'élément de collectage 17 plein ou l'évacuation de l'élément de collectage 17 vide avec le support d'assemblage,
- une bonne ergonomie car les éléments de collectage 17 sont au plus près du point de travail des opérateurs 16 sur toute la ligne d'assemblage 11.

## Revendications

1. Procédé d'approvisionnement en pièces (12), d'une ligne d'assemblage (11) sur laquelle se déplace un support d'assemblage (14) portant un sous-ensemble (10) de véhicule automobile et où des pièces (12) sont ajoutées au sous-ensemble (10) de véhicule automobile au niveau de plusieurs postes de montage, dans lequel un élément de collectage (17) contenant des pièces (12) à assembler au sous-ensemble (10) de véhicule automobile au niveau d'au moins un poste de montage (13) donné est automatiquement associé au support d'assemblage (14) puis entraîné par le support d'assemblage (14) pour que le support d'assemblage (14) et l'élément de collectage (17) atteignent automatiquement ensemble le poste de montage (13), **caractérisé en ce qu'**il comprend une ou plusieurs étapes d'association réalisant simultanément:
- une élévation (E4) du support d'assemblage (14) entre un convoyeur inférieur (20) de transport de l'élément de collectage (17) à un emplacement d'association (19) et un convoyeur supérieur (15) de déplacement de l'élément de collectage (17) le long de la ligne d'assemblage,
- et un maintien (E3) de l'élément de collectage (17) à l'emplacement d'association (19) configuré pour coïncider avec la trajectoire du support d'assemblage (14) durant l'étape (E4) d'élévation de façon à déposer l'élément de collectage (17) sur le support d'assemblage (14).

2. Procédé d'approvisionnement selon la revendication 1, **caractérisé en ce qu'**un cycle comprenant en outre les étapes successives suivantes est associé à chaque sous-ensemble (10) de véhicule automobile :
- déplacement (E5) de l'élément de collectage (17) le long de la ligne d'assemblage (11) par convoyage du support d'assemblage (14), en passant par le poste de montage (13) où les pièces (12) sont extraites de l'élément de collectage (17),
- transport (E7) de l'élément de collectage (17) en direction de l'emplacement d'association (19), par convoyage du support d'assemblage (14),
- suppression automatique (E8) de l'association entre l'élément de collectage (17) et le support d'assemblage (14), à proximité de l'emplacement d'association (19).

3. Procédé d'approvisionnement selon la revendication 2, **caractérisé en ce que** préalablement à l'étape (E3, E4) d'association, le cycle comprend une étape (E1) d'approvisionnement de l'élément de collectage (17) en pièces (12) à assembler au sous-ensemble (10) de véhicule automobile au niveau dudit au moins un poste de montage (13) donné puis une étape (E2) de transfert de l'élément de collectage (17) contenant les pièces (12) jusqu'à l'emplacement d'association (19).

4. Procédé d'approvisionnement selon la revendication 3, **caractérisé en ce qu'**après l'étape (E8) de suppression automatique de l'association, le cycle comprend une étape (E9) de transfert de l'élément de collectage (17) vers une zone (27) où l'étape (E1) d'approvisionnement du cycle suivant est réalisée.

5. Procédé d'assemblage d'un sous-ensemble (10) de véhicule automobile, dans lequel au moins un poste de montage (13) donné d'une ligne d'assemblage (11) du sous-ensemble (10) de véhicule automobile est approvisionné en pièces (12) à assembler au sous-ensemble (10) de véhicule automobile au niveau dudit au moins un poste de montage (13) donné en mettant en oeuvre le procédé d'approvisionnement selon l'une quelconque des revendications 1 à 4.

6. Procédé d'assemblage selon la revendication 5, **caractérisé en ce qu'**avant l'étape (E7) de transport du procédé d'approvisionnement, le procédé d'assemblage comprend une étape (E6) d'évacuation, depuis le support d'assemblage (14), du sous-ensemble (10) assemblé durant l'étape (E5) de déplacement du procédé d'approvisionnement.

7. Procédé d'assemblage selon l'une des revendications 5 et 6, **caractérisé en ce que** les pièces (12) et/ou le sous-ensemble (10) comportent au moins un siège du véhicule automobile.

8. Système d'approvisionnement en pièces (12) pour une ligne d'assemblage (11) sur laquelle se déplace un support d'assemblage (14) portant un sous-ensemble (10) de véhicule automobile et où des pièces (12) sont ajoutées au sous-ensemble (10) de véhicule automobile au niveau de plusieurs postes de montage (13), **caractérisé en ce qu'**il comprend des moyens matériels et/ou logiciels qui mettent en oeuvre le procédé d'approvisionnement selon l'une quelconque des revendications 1 à 4.

9. Système d'approvisionnement selon la revendication 8, **caractérisé en ce que** le support d'assemblage (14) est équipé d'un élément de portage (18) de l'élément de collectage (17), configuré de sorte à venir automatiquement en contact, lors d'une élévation (F3) du support d'assemblage (14), avec l'élément de collectage (17) positionné par un élément de maintien (22) à l'emplacement d'association (19) coïncidant avec la trajectoire d'élévation de l'élément de portage (18).

10. Système d'approvisionnement selon la revendication 9, **caractérisé en ce que** l'élément de portage (18) comprend un support adoptant une forme générale de U dont les branches présentent entre elles un écartement inférieur à une dimension de l'élément de collectage (17) et supérieur à une dimension de l'élément de maintien (22).

11. Ligne d'assemblage d'un sous-ensemble de véhicule automobile, comprenant des postes de montage et un système d'approvisionnement selon l'une quelconque des revendications 8 à 10 approvisionnant au moins un poste de montage (13) donné en pièces (12) à assembler au sous-ensemble (10) de véhicule automobile au niveau dudit au moins un poste de montage (13) donné.

## Patentansprüche

1. Verfahren zur Belieferung einer Montagelinie (11) mit Bauteilen (12), auf der sich ein eine Kraftfahrzeug-Teileinheit (10) tragender Montageträger (14) verschiebt und wo im Bereich mehrerer Montagestationen Bauteile (12) zur Kraftfahrzeug-Teileinheit (10) hinzugefügt werden, wobei ein Sammelelement (17), das an die Kraftfahrzeug-Teileinheit (10) im Bereich mindestens einer gegebenen Montagestation (13) zu montierende Bauteile (12) enthält, automatisch mit dem Montageträger (14) verbunden und dann vom Montageträger (14) mitgenommen wird, damit der Montageträger (14) und das Sammelelement (17) automatisch zusammen die Montagestation (13) erreichen, **dadurch gekennzeichnet, dass** es einen oder mehrere Verbindungsschritte enthält, die gleichzeitig durchführen:
- eine Anhebung (E4) des Montageträgers (14) zwischen einer unteren Fördereinrichtung (20) zum Transport des Sammelelements (17) zu einer Verbindungsstelle (19) und einer oberen Fördereinrichtung (15) zur Verschiebung des Sammelelements (17) entlang der Montagelinie,
- und einen Halt (E3) des Sammelelements (17) an der Verbindungsstelle (19), die konfiguriert ist, um während des Schritts (E4) der Anhebung, um das Sammelelement (17) auf dem Montageträger (14) abzulegen, mit der Strecke des Montageträgers (14) zusammenzufallen.

2. Belieferungsverfahren nach Anspruch 1, **dadurch gekennzeichnet, dass** ein Zyklus, der außerdem die folgenden aufeinanderfolgenden Schritte enthält, mit jeder Kraftfahrzeug-Teileinheit (10) verbunden ist:
- Verschiebung (E5) des Sammelelements (17) entlang der Montagelinie (11) durch Befördern des Montageträgers (14), mit Durchlauf über die Montagestation (13), wo die Bauteile (12) vom Sammelelement (17) entnommen werden,
- Transport (E7) des Sammelelements (17) in Richtung der Verbindungsstelle (19) durch Befördern des Montageträgers (14),
- automatische Aufhebung (E8) der Verbindung zwischen dem Sammelelement (17) und dem Montageträger (14) in der Nähe der Verbindungsstelle (19).

3. Belieferungsverfahren nach Anspruch 2, **dadurch gekennzeichnet, dass** der Zyklus vor dem Verbindungsschritt (E3, E4) einen Schritt (E1) der Belieferung des Sammelelements (17) mit im Bereich der mindestens einen gegebenen Montagestation (13) an die Kraftfahrzeug-Teileinheit (10) zu montierenden Bauteilen (12), dann einen Schritt (E2) der Weiterleitung des die Bauteile (12) enthaltenden Sammelelements (17) bis zur Verbindungsstelle (19) enthält.

4. Belieferungsverfahren nach Anspruch 3, **dadurch gekennzeichnet, dass** der Zyklus nach dem Schritt (E8) der automatischen Aufhebung der Verbindung einen Schritt (E9) der Weiterleitung des Sammelelements (17) zu einer Zone (27) enthält, in der der Belieferungsschritt (E1) des Zyklus durchgeführt wird.

5. Montageverfahren einer Kraftfahrzeug-Teileinheit (10), wobei mindestens eine gegebene Montagestation (13) einer Montagelinie (11) der Kraftfahrzeug-Teileinheit (10) mit im Bereich der mindestens einen gegebenen Montagestation (13) an die Kraftfahrzeug-Teileinheit (10) zu montierenden Bauteilen (12) beliefert wird, indem das Belieferungsverfahren nach einem der Ansprüche 1 bis 4 angewendet wird.

6. Montageverfahren nach Anspruch 5, **dadurch gekennzeichnet, dass** vor dem Transportschritt (E7) des Belieferungsverfahrens das Montageverfahren einen Schritt (E6) der Entfernung, vom Montageträger (14), der montierten Teileinheit (10) während des Verschiebungsschritts (E5) des Belieferungsverfahrens enthält.

7. Montageverfahren nach einem der Ansprüche 5 und 6, **dadurch gekennzeichnet, dass** die Bauteile (12) und/oder die Teileinheit (10) mindestens einen Sitz des Kraftfahrzeugs aufweisen.

8. System zur Belieferung mit Bauteilen (12) für eine Montagelinie (11), auf der sich ein Montageträger (14) verschiebt, der eine Kraftfahrzeug-Teileinheit (10) trägt, und wo im Bereich mehrerer Montagestationen (13) Bauteile (12) zur Kraftfahrzeug-Teileinheit (10) hinzugefügt werden, **dadurch gekennzeichnet, dass** es Hardware- und/oder Softwareeinrichtungen enthält, die das Belieferungsverfahren nach einem der Ansprüche 1 bis 4 anwenden.

9. Belieferungssystem nach Anspruch 8, **dadurch gekennzeichnet, dass** der Montageträger (14) mit einem Tragelement (18) des Sammelelements (17) ausgestattet ist, das so konfiguriert ist, dass es bei einer Anhebung (F3) des Montageträgers (14) automatisch mit dem Sammelelement (17) in Kontakt kommt, das von einem Halteelement (22) an der Verbindungsstelle (19) positioniert wird, die mit der Anhebungsstrecke des Tragelements (18) zusammenfällt.

10. Belieferungssystem nach Anspruch 9, **dadurch gekennzeichnet, dass** das Tragelement (18) einen Träger enthält, der eine allgemeine U-Form annimmt, dessen Schenkel zwischen sich einen Abstand geringer als eine Abmessung des Sammelelements (17) und größer als eine Abmessung des Halteelements (22) aufweisen.

11. Montagelinie einer Kraftfahrzeug-Teileinheit, die Montagestationen und ein Belieferungssystem nach einem der Ansprüche 8 bis 10 enthält, das mindestens eine gegebene Montagestation (13) mit im Bereich der mindestens einen gegebenen Montagestation (13) an die Kraftfahrzeug-Teileinheit (10) zu montierenden Bauteilen (12) beliefert.

## Claims

1. Method of supplying with parts (12) an assembly line (11) along which moves an assembly fixture (14) carrying an automobile vehicle subassembly (10) and on which parts (12) are added to the automobile vehicle subassembly (10) in a plurality of workstations, in which a collecting element (17) containing parts (12) to be assembled to the automobile vehicle subassembly (10) in at least one given workstation (13) is automatically associated with the assembly fixture (14) and then driven by the assembly fixture (14) so that the assembly fixture (14) and the collecting element (17) automatically reach the workstation (13) together, **characterized in that** it comprises one or more association steps for simultaneously:
- raising (E4) the assembly fixture (14) between a bottom conveyor (20) for transporting the collecting element (17) to an association location (19) and a top conveyor (15), and
- retaining (E3) the collecting element (17) at the association location (19) configured to lie on the path of the assembly fixture (14) during the raising step (E4) in order to deposit the collecting element (17) on the assembly fixture (14).

2. Supply method according to Claim 1, **characterized in that** a cycle further comprising the following successive steps is associated with each automobile vehicle subassembly (10):
- moving (E5) the collecting element (17) along the assembly line (11) by conveying the assembly fixture (14), through the workstation (13), in which the parts (12) are extracted from the collecting element (17),
- transporting (E7) the collecting element (17) toward the association location (19) by conveying the assembly fixture (14),
- automatically eliminating (E8) the association between the collecting element (17) and the assembly fixture (14) in the vicinity of the association location (19) .

3. Supply method according to Claim 2, **characterized in that** the cycle includes before the association step (E3, E4) a step (E1) of supplying the collecting element (17) with parts (12) to be assembled to the automobile vehicle subassembly (10) in said at least one given workstation (13) and then a step (E2) of transferring the collecting element (17) containing the parts (12) to the association location (19).

4. Supply method according to Claim 3, **characterized in that** the cycle includes after the step (E8) of automatic elimination of the association a step (E9) of transferring the collecting element (17) to a zone (27) in which the supply step (E1) of the next cycle is performed.

5. Method of assembling an automobile vehicle subassembly (10) in which at least one given workstation (13) of an assembly line (11) for assembling the automobile vehicle subassembly (10) is supplied with parts (12) to be assembled to the automobile vehicle subassembly (10) in said at least one given workstation (13) using the supply method according to any one of claims 1 to 4.

6. Assembly method according to Claim 5, **characterized in that** the assembly method includes before the transport step (E7) of the supply method a step (E6) of evacuating from the assembly fixture (14) the subassembly (10) assembled during the movement step (E5) of the supply method.

7. Assembly method according to either one of Claims 5 and 6, **characterized in that** the parts (12) and/or the subassembly (10) include (s) at least one seat of the automobile vehicle.

8. System for supplying parts (12) for an assembly line (11) along which moves an assembly fixture (14) carrying an automobile vehicle subassembly (10) and on which parts (12) are added to the automobile vehicle subassembly (10) in a plurality of workstations (13), **characterized in that** it includes hardware and/or software means implementing the supply method according to any one of Claims 1 to 4.

9. Supply system according to Claim 8, **characterized in that** the assembly fixture (14) is equipped with a member (18) for carrying the collecting element (17) configured so as to come automatically in contact, on raising (F3) of the assembly fixture (14), with the collecting element (17) positioned by a retaining element (22) at the association location (19) on the path along which the carrier member (18) is raised.

10. Supply system according to Claim 9, **characterized in that** the carrier member (18) includes a support having the general shape of a U the branches of which have a distance between them less than a dimension of the collecting element (17) and greater than a dimension of the retaining element (22).

11. Assembly line for assembling an automobile vehicle subassembly including workstations and a supply system according to any one of Claims 8 to 10 supplying at least one given workstation (13) with parts (12) to be assembled to the automobile vehicle subassembly (10) in said at least one given workstation (13).
